# EUROPEAN PATENT APPLICATION

(11) **EP 1 619 292 A2**
(43) Date of publication of application: **25.01.2006**
(21) Application number: 05254578.7
(22) Date of filing: 22.07.2005
(51) Int. Cl.: D06M 15/03, D06M 15/05, A01N 43/16

(54) **Anti-microbial chitosan composition for textile products**

(30) Priority: 15.12.2004 US 13895; 22.07.2004 CN 04153085
(71) Applicant: Sparrow International, Inc., Springfield PA 19064 (US)
(72) Inventor: Liang, Chen, Shanghai, China 2012012 (CN)
(74) Representative: Alcock, David

(57) **Abstract**

This disclosure provides an anti-microbial chitosan composition for use in textile products, methods of producing the anti-microbial chitosan composition, and techniques for incorporating the anti-microbial chitosan composition into products, and products comprising the anti-microbial chitosan composition.

## Description

### RELATED APPLICATIONS

This application is a continuation-in-part of U.S. Application Serial Number 10/882,086 filed June 29, 2004 and claiming priority to Chinese Application Serial Number 03129641.6 filed June 30, 2003; U.S. Application Serial Number 10/888,077 filed July 8, 2004 and claiming priority to Chinese Application Serial Number 03210455.3 filed September 9, 2003; and U.S. Application Serial Number 11/013,895 filed December 15, 2004 and claiming priority to Chinese Application Serial Number 200410053085.6 filed July 22, 2004, the contents each of which are incorporated herein by reference.

Each of the foregoing applications and patents and articles, and each document cited or referenced in each of the foregoing applications and patents and articles, including during the prosecution of each of the foregoing applications and patents ("application and article cited documents"), and any manufacturer's instructions or catalogues for any products cited or mentioned in each of the foregoing applications and patents and articles and in any of the application and article cited documents, are hereby incorporated herein by reference. Furthermore, all documents cited in this text, and all documents cited or referenced in documents cited in this text, and any manufacturer's instructions or catalogues for any products cited or mentioned in this text or in any document hereby incorporated into this text, are hereby incorporated herein by reference. Documents incorporated by reference into this text or any teachings therein can be used in the practice of this invention.

### BACKGROUND OF THE INVENTION

Anti-microbial fabrics and textile products have been commonly used in the medical, pediatric, and geriatric fields. In the past, these products were processed and treated using chemicals that would often yield highly toxic or otherwise undesirable by-products. These processes may also leave undesirable residue in the final product. Furthermore, some of these processes may alter the fundamental properties of the basic fibers and fabrics that could cause a product to be less effective in its intended use, e.g., absorbance, insulation, etc. Consequently, there have been ongoing efforts to develop more environmentally-friendly, effective, natural, and property-preserving processes. There have also been efforts to develop better and more environmentally-friendly processes for sterilizing and incorporating anti-microbial features into fabrics and textile products in general use.

Textile fibers and fabrics are often ideal settings for the growth of micro-organisms. Some products may include additional elements that may introduce microorganisms or otherwise further promote the growth of these microorganisms. One example of general-use textile products that require sterilization is down products. Down articles, such as down quilts, down garments and so on, usually comprise natural filling materials from animals or birds, such as the down from ducks, down from geese, etc. These animals live in extremely active biologic environments, resulting in the accumulation of bacteria on their feathers and down, such as from surrounding grass, feces, etc. A majority (around 60% in 2004) of global down production originates in China, including the southern portion, which is a breeding ground for infectious diseases and new bacteria. Avian flu ("bird flu") and Severe Acute Respiratory Syndrome (SARS) are two recent examples of infectious disease associated with this region. In addition, with the stuffiness and humid conditions in which these down articles may be transported, shipped, stored, or used by consumers, bacteria and mold may form over the lifetime of finished products, such as down bedding. This may cause peculiar smells and other deleterious effects. During manufacture, these articles have traditionally been disinfected with high pressure, high temperature or oxirane. The effects of these techniques, however, are very short lived, and products from these processes, therefore, do not possess long-term anti-microbial properties. These treatments are intended to ensure that the products meet short-term testing requirements, such as import standards, and their effects generally degrade over the useful life of the product. Down products have also been sterilized by injecting chemical agents, such as PCP. These chemicals raise safety, environmental, and health concerns for the makers and consumers of the products.

Commonly-used home textiles, such as bath towels, bathroom rugs, decorative textile shower curtains, window curtains, and other products often serve as a breeding ground for bacterial growth, with attendant unpleasant odors and potential deleterious health effects for household inhabitants. Some products, such as bathroom towels, routinely develop such bacterial accumulations due to frequent use and (by design) moisture collection within the threads of the textile material of which the towel is composed. Others, such as window curtains, are simply difficult and/or expensive to wash frequently. Consequently, they develop bacteria and attendant odors over time.

Aggressive anti-microbial chemicals, or biocidal agents, are also used in various consumer products to impart anti-microbial attributes. These agents are typically chemicals that are toxic to humans in large doses, and, depending on the application, may be volatile and therefore less durable. Triclosan®, manufactured by Ciba Geigy, is the most commonly-used anti-microbial agent of this kind.

In view of these concerns and the lack of alternatives that meet all of the aforementioned effectiveness, durability, safety, and other advantageous criteria, developers have been looking to use natural substances in treating and producing textile products with antimicrobial properties. Chitosan, a substance derived from a component found in crustacean shells called chitin, has long been known to possess anti-microbial attributes. However, heretofore there has been little success in using it as an effective, durable finishing agent for products such as down or textiles. It has proven extremely difficult to manipulate chitosan in such a way as to feasibly apply it to useful products (e.g., textiles), such that it retains its effectiveness, remains durable, does not degrade, and may be applied cost-effectively.

An existing technique for using chitosan is to coat it onto the fiber of a textile product by dissolving the chitosan in a weak acid. A disadvantage of this technique is that chitosan may gradually hydrolyze in acid solution and turn into monosaccharose, thereby losing its antimicrobial properties. Furthermore, the chitosan in the solution is homomolecular, and the chitosan content may need to be adjusted for different bacteria (gram-positive bacteria and gram-negative bacteria) and fungus.

Another existing technique for using chitosan includes putting a fine chitosan powder into the polymer of polyester, acrylic, or rayon in the spinning stage to produce chitosan-polyester, chitosan-acrylic, and chitosan-rayon, respectively. In these fibers, chitosan powder is mixed with the original polymer throughout the composition. A disadvantage of this technique is that however fine the powder may be, they may be wrapped inside the inner parts of the fibers, thereby affecting the physical properties of the fibers. Another disadvantage of this technique is that the powder form may not provide continuous coverage over the entire surfaces of the fibers.

Accordingly, improved chitosan compositions would be highly desirable for use in treating textile products whose users may value or benefit from anti-microbial attributes.

### SUMMARY OF THE INVENTION

The present invention was made in consideration of the above problems and has as its object the provision of an effective technique for producing anti-microbial textile products using anti-microbial chitosan compositions.

In one aspect, the present invention provides an anti-microbial composition comprising chitin, chitosan and cellulose.

In one embodiment, the present invention provides an anti-microbial composition comprising chitin, chitosan and cellulose in a non-covalent association.

In one embodiment, the present invention provides a textile product comprising an anti-microbial composition comprising chitin, chitosan and cellulose. The textile can be, for example, a fabric, yarn or another fibrous material. In a specific embodiment, the textile product is down (e.g., goose down, duck down).

In another aspect, the present invention provides a method of producing a solution comprising an anti-microbial finishing agent, the method comprising the steps of:
a) combining a composition comprising chitin, chitosan and cellulose with an acetic acid solution to form a mixture;
b) combining an amino-alcohol derivative and a cationic surfactant into the mixture, and
c) incubating the mixture, thereby producing a solution comprising an anti-microbial finishing agent.

In specific embodiments, the acetic acid solution is about 25% acetic acid, the cationic surfactant is dehydrated sorbitol monooleate and the amino-alcohol derivative is an N-methyl amino acid or a derivative thereof. The percent weight of the amino-alcohol derivative in the solution can be about 3 to about 10% and the percent weight of the cationic surfactant in the solution can be about 2 to about 4%.

In another embodiment, the present invention provides a solution comprising acetic acid, a cationic surfactant, an amino-alcohol derivative and a non-covalent association of chitin, chitosan and cellulose.

In a specific embodiment, the present invention provides a solution comprising about 25% acetic acid, dehydrated sorbitol monooleate, an N-methyl amino acid or a derivative thereof and a non-covalent association of chitin, chitosan and cellulose.

In yet another aspect, the present invention provides a method of producing an anti-microbial finishing agent, the method comprising the steps of:
a) combining a composition comprising chitin, chitosan and cellulose with a first acetic acid solution to form a first mixture;
b) combining a composition comprising chitin, chitosan and cellulose with a second acetic acid solution to form a second mixture;
c) combining a composition comprising chitin, chitosan and cellulose with a third acetic acid solution to form a third mixture;
d) combining an amino-alcohol derivative and a cationic surfactant with the first, second and third mixtures;
e) combining the first, second and third mixtures to form a fourth mixture; and
f) incubating the fourth mixture, thereby producing an anti-microbial finishing agent.

In a specific embodiment, the first mixture is formed for about 9 to about 10 hours at temperature of about 70 to about 80°C, the second mixture is formed for about 45 to about 50 hours at temperature of about 40 to about 50°C and the third mixture is formed for about 95 to about 100 hours at temperature of about 20 to about 25°C. The fourth mixture can be maintained for about 20 to about 25 hours at a temperature of about 20°C to about 25°C and then incubated for about 40 to about 50 hours at a temperature of about 20°C to about 25°C.

In yet another aspect, the present invention provides a down product comprising a surface layer, a middle layer and a support layer, wherein anyone of the layers contains the anti-microbial composition comprising chitin, chitosan and cellulose.

In one embodiment, the middle layer can comprise a composite material, wherein the composite material is the anti-microbial composition comprising chitin, chitosan and cellulose.

In another embodiment, the surface layer and the support layer can comprise a fiberous material, such as a fabric. The fiberous material can have a fiber density that is not less than about 190 thread count.

In yet another aspect, the present invention provides a method for the production of a textile product, the method comprising the steps of: combining the textile product with a solution containing an anti-microbial composition comprising chitin, chitosan and cellulose and drying the textile product. The anti-microbial composition can be sprayed on the textile product or the textile product can be soaked with the solution containing the anti-microbial composition.

In one embodiment, the drying temperature is between about 120 to about 200°C.

Other aspects of the invention are described in or are obvious from the following disclosure, and are within the ambit of the invention.

### BRIEF DESCRIPTION OF THE DRAWINGS

The following Detailed Description, given by way of example, but not intended to limit the invention to specific embodiments described, may be understood in conjunction with the accompanying drawings, incorporated herein by reference. Various preferred features and embodiments of the present invention will now be described by way of non-limiting examples and with reference to the accompanying drawings in which:
Figure1 is a diagram illustrating a process for producing an anti-microbial chitosan composition in accordance with an embodiment of the invention;
Figure 2 is a diagram illustrating a process for applying the anti-microbial chitosan composition to a textile product in accordance with an embodiment of the present invention;
Figure 3 is a diagram illustrating a process for applying the anti-microbial chitosan composition to a textile product in accordance with an embodiment of the present invention;
Figure 4 is a diagram illustrating a process for applying the anti-microbial chitosan composition to a textile product in accordance with an embodiment of the present invention;
Figure 5 illustrates a side view of a textile product in accordance with an embodiment of the present invention;
Figure 6 illustrates a side view of a textile product in accordance with an embodiment of the present invention; and
Figure 7 illustrates a side view of a textile product in accordance with an embodiment of the present invention.

### DETAILED DESCRIPTION OF THE INVENTION

To solve the above-described problems and to achieve the objects of the invention, an anti-microbial chitosan composition (also referred to herein as a "finishing agent") is produced using the methods described herein.

The anti-microbial chitosan composition of the invention is a non-covalent association of chitin, chitosan and cellulose. Chitin is a linear polysaccharide consisting of (1-4)-linked 2-acetamido-2-deoxy-β -D-glucopyranose. Chitin is well known in the art to have the following structure:

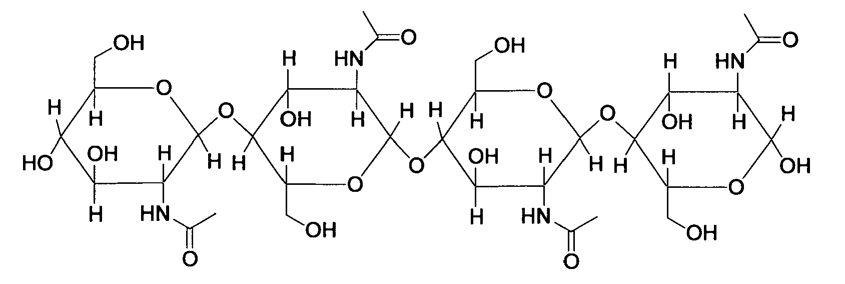

Chitosan is a linear polysaccharide consisting of (1-4)-linked 2-amino-2-deoxy-β -D-glucopyranose. Chitosan is made by alkaline N-deacetylation of chitin. Chitin and chitosan are described, for example, by Broughton et al., INTC 2001, September 5-7, 2001, Renaissance Harborplace, Baltimore, Maryland.

Without wanting to be bound by theory, the anti-microbial chitosan composition of the invention is believed to bind to sialinic acid of the microbe, thereby limiting the mobility of the microbe and further, penetrating the cell wall of the microbe, and causing cell death. Therefore, the anti-microbial chitosan composition inhibits microbial proliferation within or on the surface of the textile products where it is applied.

A process for production of the anti-microbial chitosan composition begins with the formation of three separate mixtures, each containing chitin, chitosan and cellulose combined with an acetic acid solution. The acetic acid solution is from about 15%, 20%, 25%, 30%, 35%, 40%, or 45% to about 50% acetic acid. Preferably, the acetic acid solution is about 25% acetic acid.

Each mixture is combined with an amino-alcohol derivative and a cationic surfactant and stirred. Preferably, the percent weight of the amino-alcohol derivative in the solution is about 3 to about 10% and the percent weight of the cationic surfactant in the solution is about 2 to about 4%.

The term "cationic surfactant", as used herein, describes surfactants wherein the hydrophobic or hydrophillic moiety, preferably hydrophillic, carries a positive charge when dissolved in an aqueous media. The cationic surfactant can be any known in the are, including but not limited to dodecylamine hydrochloride, hexadecyltrimethyl ammonium bromide, cetyltrimethyl-ammonium bromide, cetylpyridinium bromide dieicosyldimethyl ammonium chloride, didocosyldimethyl ammonium chloride, dioctadecyidimethyl ammonium chloride; dioctadecyldimethyl ammonium methosulphate, ditetradecyldimethyl ammonium chloride and naturally occurring mixtures of above fatty groups, e.g. di(hydrogenated tallow)dimethyl ammonium chloride, di(hydrogenated tallow)dimethyl ammonium metho-sulphate, ditallow dimethyl ammonium chloride, and dioleyidimethyl ammonium chloride. Suitable cationic surfactants also include imidazolinium compounds, for example, 1-methyl-1-(tallowylamido-)ethyl-2-tallowy14,5-dihydroimidazolinium methosulphate and 1-methyl-1-(palmitoylamido)ethyl-2-octadecyl 4,5-dihydro-imidazolinium methosulphate. Other useful imidazolinium materials are 2-heptadecyl-1-methyl-1(2-stearoylamido)-ethyl-imidazolinium methosulphate and 2-lauryllhydroxyethyl-1-oleyl-imidazolinium chloride.

Further examples of suitable cationic surfactants include dialkyl(C12-C22)dimethylammonium chloride, alkyl(coconut)dimethylbenzylammonium chloride, octadecylamine acetate salt, tetradecylamine acetate salt, tallow alkylpropylenediamine acetate salt, octadecyltrimethylammonium chloride, alkyl(tallow)trimethylammonium chloride, dodecyltrimethylammonium chloride, alkyl(coconut)trimethylammonium chloride, hexadecyltrimethylammonium chloride, biphenyltrimethylammonium chloride, alkyl(tallow)-imidazoline quaternary salt, tetradecylmethylbenzylammonium chloride, octadecyidimethylbenzylammonium chloride, dioleyidimethylammonium chloride, polyoxyethylene dodecylmonomethylammonium chloride, polyoxyethylene alkyl (C12-C22) benzylammonium chloride, polyoxyethylene laurylmonomethyl ammonium chloride, 1-hydroxyethyl-2-alkyl(tallow)-imidazoline quaternary salt; and a silicone cationic surfactant having a siloxane group as a hydrophobic group, a fluorine-containing cationic surfactant having a fluoroalkyl group as a hydrophobic group.

Additional cationic surfactants are described, for example, in the "Surfactant Science Series, Volume 4, Cationic Surfactants" or in the "Industrial Surfactants Handbook." Classes of useful cationic surfactants described in these references include amide quats (i.e., Lexquat AMG & Schercoquat CAS), glycidyl ether quats (i.e., Cyostat 609), hydroxyalkyl quats (i.e., Dehyquart E), alkoxypropyl quats (i.e., Tomah Q-17-2), polypropoxy quats (Emcol CC-9), cyclic alkylammonium compounds (i.e., pyridinium or imidazolinium quats), and/or benzalkonium quats.

In a specific embodiment, the cationic surfactant is dehydrated sorbitol monooleate.

The amino-alcohol derivative can be any known in the art, such as is described in U.S. Patent No. 4,450,115, 4,381,398 and 5,250,546, the contents of which are incorporated herein by reference. In a specific embodiment, the amino-alcohol derivative is an N-methyl amino acid or N-methyl amino acid derivative. The amino acid can be any known in the art (e.g., alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine or valine and derivatives thereof).

Each of the three mixtures can be maintained at temperatures in a range of from about 20 °C, 25 °C, 30 °C, 35 °C, 40 °C, 45 °C, 50 °C, 55 °C, 60 °C, 65 °C, 70 °C, 75 °C, 80 °C, 85 °C, 90 °C or 95 °C to about 100 °C. Preferably, each mixture is maintained within a different range. For example, the first mixture can be maintained in a range of from about 65 °C, 70 °C, 75 °C, 80 °C, 85 °C, 90 °C, or 95 °C to about 100 °C, the second mixture can be maintained in a range of from about 35 °C, 40 °C, 45 °C, 50 °C, or 55 °C to about 60 °C and the third mixture can be maintained in a range of from about 20 °C or 25 °C to about 30 °C. In specific embodiments, the first mixture is formed for about 9 to about 10 hours at temperatures of about 70 to about 80°C, the second mixture is formed for about 45 to about 50 hours at temperatures of about 40 to about 50°C and the third mixture is formed for about 95 to about 100 hours at temperatures of about 20 to about 25°C.

Following addition of the amino-alcohol derivative and cationic surfactant, each of the three mixtures can be filtered. Next, the three mixtures are combined and maintained in solution at room temperature (e.g., about 20°C, 21°C, 22°C, 23°C, 24°C or about 25°C) for about 20 to about 25 hours. In a final step, the combined mixture is incubated in solution, preferably for about 40 to about 50 hours, at room temperature (e.g., about 20°C, 21°C, 22°C, 23°C, 24°C or about 25°C) to obtain the anti-microbial chitosan composition in solution.

The solution obtained from the process described herein can then be applied to any textile products according to standard methods known in the art. Textile products include fibrous materials, yarn, fabric, cloth, as well as other materials such as down. Methods for incorporation of finishing agents into textiles are well-known in the art, as described in Ohnishi et al., U.S. Pat. No. 6,524,508 and T. Ramachandran, et al., (2004) Antimicrobial Textiles - an Overview, IE (I) Journal-TX, vol. 84, pp. 42-47, the contents of which are incorporated herein by reference. For example, textile products can be immersed in the solution, or alternatively, sprayed to achieve the amount of coating desired.

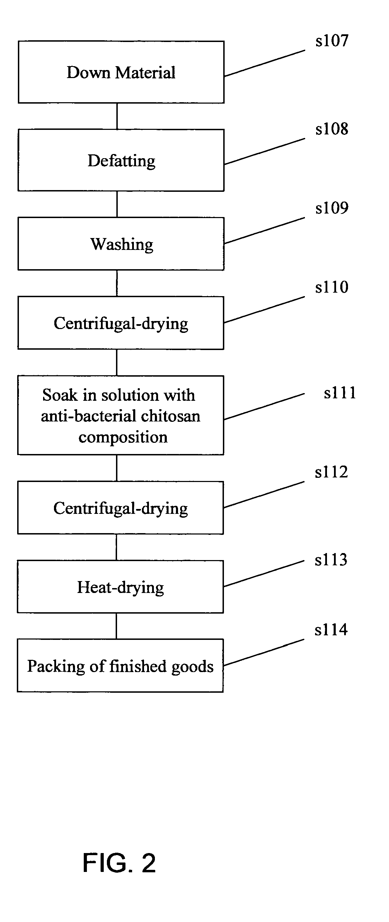

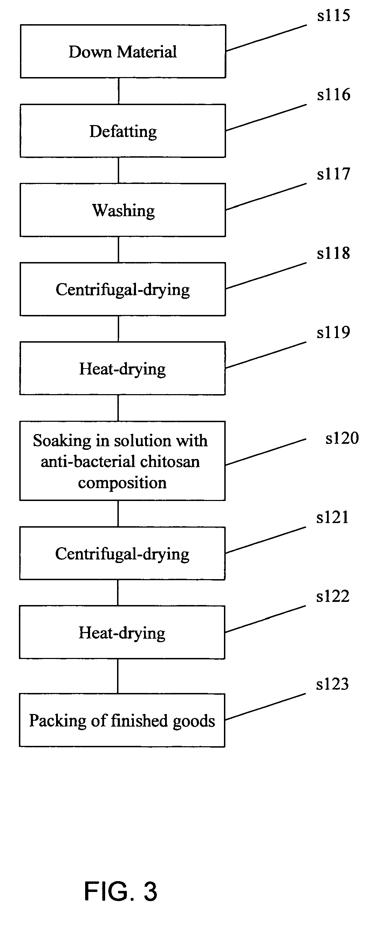

Where the textile product comprises down feathers, the down can first be defatted, washed and dried (e.g., spun dry or heat dried) before application, which can involve either soaking or spraying the solution (Figures 2, 3 and 4). The down is then heat dried at a temperature of about 120 °C to about 200 °C. Preferably the anti-microbial chitosan composition comprises 1% to 1.5% of the dried down product.

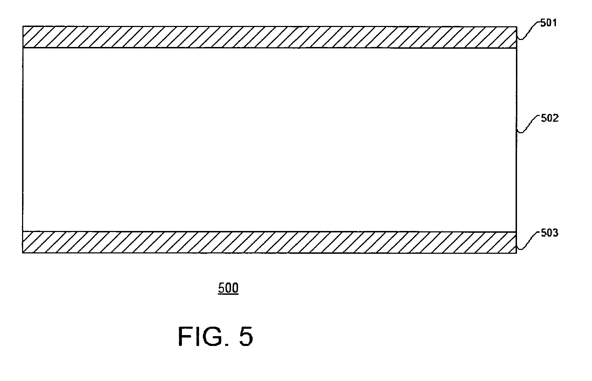

Figure 5 illustrates a textile product 500 comprising the anti-microbial chitosan composition according to an embodiment of the invention. As shown in Figure 5, textile product 500 can include a surface layer 501, a middle layer 502, and a bottom supporting layer 503. For illustrative purposes, textile product 500 can be a down cloth. Surface layer 501 can include a face fabric or other common textile fabric. It can further comprise the anti-microbial chitosan composition. Surface layer 501 can comprise one or more materials treated using process 200. Middle layer 502 can include a composite layer. Thus, layer 502 can include down material. The down material can comprise one or more synthetic or natural filling material, which can be from any animal or bird, such as down from ducks, down from geese, and the like. The down material can further comprise the anti-microbial chitosan composition. The down material can comprise one or more materials treated using processes of the invention.

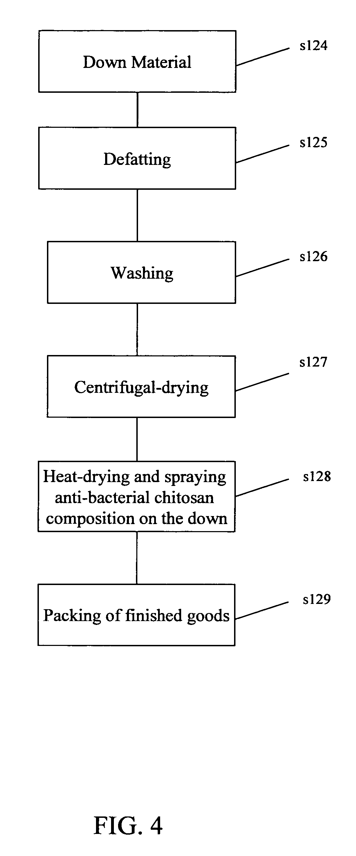

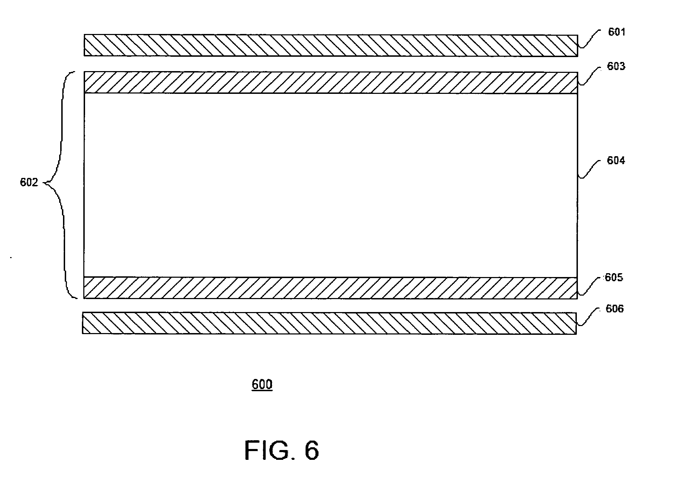

Figure 6 shows a textile product 600 comprising anti-microbial chitosan composition in accordance with an embodiment of the present invention. As illustrated in Figure 4, textile product 600 can include a surface layer 601, a middle composite layer 602 a first layer 603 of composite layer 602, a second layer 604 of composite layer 602; a third layer 605 of composite layer 602, and a bottom supporting layer 606. For illustrative purposes, textile product 600 can be a down quilt. Surface layer 601 and bottom supporting layer 606 can be the same as surface layer 501 and bottom supporting layer 503 shown in Figure 5. Middle composite layer 602 can include one or more layers of a face fabric or other common textile fabric. Middle composite 602 can also include filling that can be between or within one or more internal bladders or one or more layers of internal bladder material. An internal bladder can be tailored with a single layer of face fabric or other common textile fabric. An internal bladder can form a double layer of antibiotic textile face fabric or other common textile fabric. Middle composite layer 602 can comprise the anti-microbial chitosan composition. Middle composite layer 602 can comprise one or more materials treated using the processes described herein.

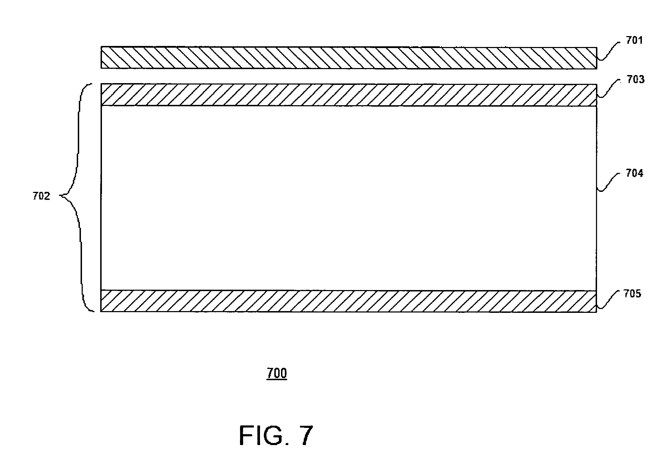

Referring now to Figure 7, a textile product 700 comprising anti-microbial chitosan composition in accordance with an embodiment of the present invention can comprise a surface layer 701, a middle composite layer 702, a first composite layer 703, a second composite layer 704, and a bladder material 705. For illustrative purposes, textile product 700 can be a down pillow. Surface layer 701 can be the same as surface layer 501 or 601 shown in Figures 5 and 6, respectively. First composite layer 703 can be a protective bladder material comprising the anti-microbial chitosan composition. First composite layer 703 can comprise one or more materials treated using process 200. Second composite layer 704 can comprise a down product treated with the anti-microbial chitosan composition. The second composite layer 704 can comprise one or more materials treated using the processes described herein.

The present invention is additionally described by way of the following illustrative, non-limiting Examples that provide a better understanding of the present invention and of its many advantages.

### EXAMPLES

### Example 1: Process for Producing an Anti-microbial Chitosan Composition

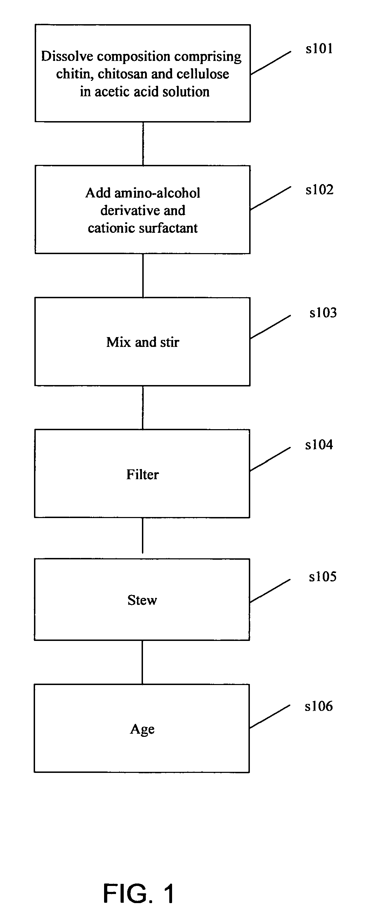

The process as illustrated in Figure 1 is described herein. Raw material comprising chitin, chitosan and cellulose is equally divided into three parts which are respectively added into acetic acid solution, as illustrated by step s101. The three solutions are kept at 70-80°C, 40-50°C and 20-25°C for 5-10 hours, 45-50 hours, and 95-100 hours, respectively. Afterwards, an amino-alcohol derivative and a cationic surfactant are added, as shown by step s102. Then, the three batches of chitosan acetic acid solutions are mixed, stirred fully (step s103), filtered (step s104) and stewed for 20-25 hours (step s105). They are then aged for 40-50 hours in an incubator (step s106). Finally, a non-covalently linked anti-microbial composition comprising chitin, chitosan and cellulose (a "finishing agent") is produced in solution.

### Example 2: Anti-Microbial Effect in Textile Products

Down and feather treated with the anti-microbial chitosan composition of the invention were tested to show the fill power, i.e., the specific volume, of treated down. The results are depicted in Table 1.

**Table 1. Fill Power of Treated Textile**

| | |
|---|---|
| Filling Power | 670.0 cubic inch per oz |
| Turbidity | 1000.0 mm |
| Oxygen Number | 1.69 mg |
| Mesophilic Aerobic Bacteria Count | 4.7x10⁴cfu/g |
| Faecal Streptococci Count | < 100 cfu/g |
| Sulphite Reducing Clostridium Count | < 100 cfu/g |
| Presence of Salmonella | not found in 20 Grams |

Down and feather treated with the anti-microbial chitosan composition of the invention were tested (method ASTM E 2149) to demonstrate the anti-bacterial effect on Staphylococcus aureus (ATCC 6538) and Klebsiella pneumoniae (ATCC 4352).

Test method ASTM E 2149 is designed to evaluate the resistance of non-leaching anti-microbial treated specimens to the growth of microbes under dynamic contact conditions. This dynamic shake flask test was developed for routine quality control and screening tests in order to overcome difficulties in using classical anti-microbial test methods to evaluate substrate-bound anti-microbials. These difficulties include ensuring contact of inoculum to treated surface (as in AATCC 100), flexibility of retrieval at different contact times, use of inappropriately applied static conditions (as in AATCC 147), sensitivity, and reproducibility. This test also allows for the versatility of testing contamination due to such things as hard water, proteins, blood, serum, various chemicals, and other contaminates or physical/chemical stresses or manipulations of the specimens of interest. Surface anti-microbial activity is determined by comparing results from the test sample to simultaneously run controls. The presence of a leaching anti-microbial is both pre- and post-determined by the presence of a zone of inhibition. For further reference, see AATCC Test Method 147-1998 Antibacterial Activity Assessment of Textile Materials: Parallel Streak Method. American Association of Textile Chemists and Colorists, RTP, NC and AATCC Test Method 100-1999 Antibacterial Finishes on Fabrics, Evaluation of American Association of Textile Chemists and Colorists, RTP, NC.

The results are depicted in Tables 2-7.

**Table 2: Staphylococcus aureus in Treated Textile**

| 0 Initial Inoculation | Contact Time | Test | Control | Origin | Reduction (%) |
|---|---|---|---|---|---|
| 1.8 x 10⁵ | 1h | 9.2x10⁵ | 1.2x10⁵ | 2.0x10⁵ | 99.5 |

**Table 3: Klebsiella pneumoniae in Treated Textile**

| Initial Inoculation | Contact Time | Test | Control | Origin | Reduction (%) |
|---|---|---|---|---|---|
| 1.2 x 10⁵ | 1 h | Not Detected | 1.0x10⁵ | 2.0 x 10⁵ | > 99.99 |

**Table 4: Staphylococcus aureus in Treated Textile**

| Sample | T=0 (cfu) | T= 1 hour (cfu) | Percentage Reduction |
|---|---|---|---|
| Treated down feather | 2.38 x 10⁴ | 0 | 100 |
| Control down feather | 2.44 x 10⁴ | 3.93 x 10⁴ | -0.61 |
| Control | 2.30 x 10⁴ | 2.92 x 10⁴ | -0.41 |

**Table 5: Staphylococcus aureus in Treated Textile**

| Sample | T=0 (cfu) | T= 24 hour (cfu) | Percentage Reduction |
|---|---|---|---|
| Treated down feather | 2.38 x 10⁴ | 0 | 100 |
| Control down feather | 2.44 x 10⁴ | 2.73 x 10⁴ | -0.12 |
| Control | 2.30 x 10⁴ | 1.22 x 10⁴ | 0.46 |

**Table 6: Klebsiella pneumoniae in Treated Textile**

| Sample | T=0 (cfu) | T=1 hour (cfu) | Percentage reduction |
|---|---|---|---|
| Treated down feather | 5.28 x 10⁴ | 0 | 100 |
| Control down feather | 4.75 x 10⁴ | 4.48 x 10⁴ | 0.06 |
| Control | 3.57 x 10⁴ | 3.23 x 10⁴ | 0.10 |

**Table 7: Klebsiella pneumoniae in Treated Textile**

| Sample | T=0 (cfu) | T=24 hour (cfu) | Percentage reduction |
|---|---|---|---|
| Treated down feather | 5.28 x 10⁴ | 0 | 100 |
| Control down feather | 4.75 x 10⁴ | 1.01 x 10⁴ | 0.79 |
| Control | 3.57 x 10⁴ | 7.5 x 10⁴ | 0.79 |

### Example 3: Anti-Microbial Effect in Textile Products

Down and feather treated with the anti-microbial chitosan composition of the invention were tested (method ASTM E 2149) for determination of anti-microbial activity of immobilized anti-microbial agents under dynamic growth conditions. The results are depicted in Table 8.

**Table 8. Klebsiella pneumoniae and Staphylococcus aureus in Treated Textile**

| Sample ID | Counts (CFU/g) | |
|---|---|---|
| | Klebsiella pneumoniae (ATCC 4352) | Staphylococcus aureus (ATCC 6538) |
| Counts of treated substrate after 1 hr contact time (A) | 6.0 x 10² | 1.3 x 10³ |
| Counts of "0" contact time for treated substrate (B) | 3.2 x 10⁵ | 2.3 x 10³ |
| Counts of inoculum control only after 1 hr contact time (C) | 1.7 x 10⁷ | 1.9 x 10⁶ |
| Counts of untreated substrate after 1 hr contact time (D) | 3.0 x 10⁵ | 1.8 x 10⁶ |

| | | |
|---|---|---|
| Reduction, % (CFU/ml), for KP = 99.8%, for SA = 99.9% | | |
| Death Rate Constant (mean log₁₀ density), for KP = 2.7, for SA = 3.2 | | |

### Example 4: Purity of Finished Product

The anti-microbial chitosan composition of the invention is differentiated from other known anti-microbial products and treatments in that it is all-natural and contains none of a common series of agents that are known to be toxic to humans. Table 9 illustrates the results of testing for an for an array of toxic compounds.

**Table 9. Agents Tested in Anti-microbial Chitosan Composition**

| Toxic Element | Units | Specification | Result |
|---|---|---|---|
| 1. Formaldehyde | ppm | 20 | <5 |
| 2. Extractable Heavy Metals | | | |
| Sb | ppm | 30 | <1.0 |
| As | ppm | 0.2 | <0.3 |
| Pb | ppm | 0.2 | <0.3 |
| Cd | ppm | 0.1 | <0.03 |
| Cr | ppm | 1.0 | <0.5 |
| Cr (VI) | ppm | ND | ND |
| Co | ppm | 1.0 | <1.0 |
| Cu | ppm | 25 | <1.0 |
| Ni | ppm | 1 | <1.0 |
| Hg | ppm | 0.02 | <0.01 |

| 3. Chlorinated Phenols | | | |
|---|---|---|---|
| PCP | ppm | 0.05 | <0.05 |
| TeCP | ppm | 0.05 | <0.05 |
| OPP | ppm | 50 | <0.5 |

| 4. Organic Tin Compounds | | | |
|---|---|---|---|
| TBT | ppm | 1.0 | ND |
| DBT | ppm | 1.0 | ND |
| MBT | ppm | 0.5 | ND |
| Odor Determination - | | None | Odorless |

### Example 5:

Durability of the anti-microbial chitosan composition is demonstrated by testing the anti-microbial effectiveness on both natural and artificially treated fabrics (knitted fabric and polyester fabric), in accordance with ASTM E2149, after the treated fabrics have been washed 20 (polyester) or 10 (knitted) times. The results for polyester are depicted in Table 10.

**Table 10: Golden Staphylococcus and Hepatitis in Polyester Fabric Following 20 Washes**

| Sample | T=0 (cfu) | T=24 hour (cfu) | Percentage Reduction |
|---|---|---|---|
| Treated polyester (Staph) | - | <1.0×10² | >99.9% |
| Control | 6.6 x 10⁴ | 1.4 x 10⁵ | |
| Treated polyester (Hepatitis) | - | 1.3 x 10³ | 98.6% |
| Control | 9.2 x 10⁴ | 5.2 x 10⁵ | |

Similar results were generated with treated knitted (cotton) fabric, with various samples washed 10 or 20 times, after which bacterial reductions of >99.9% resulted in all cases. These results occurred on white fabric and "lake blue" (color) knitted fabric.
Although the foregoing invention has been described in some detail by way of illustration and example for purposes of clarity and understanding, it will be apparent to those skilled in the art that certain changes and modifications can be practiced. Therefore, the description and examples should not be construed as limiting the scope of the invention, which is delineated by the appended numbered claims.

## Claims

1. An anti-microbial composition comprising chitin, chitosan and cellulose.

2. A textile product comprising the anti-microbial composition of claim 1.

3. A textile product according to claim 2, wherein the textile is a fibrous material.

4. A textile product according to claim 2 or 3, wherein the textile is down.

5. A method of producing a solution comprising an anti-microbial finishing agent, the method comprising the steps of:
a) combining a composition comprising chitin, chitosan and cellulose with an acetic acid solution to form a mixture;
b) combining an amino-alcohol derivative and a cationic surfactant into the mixture, and
c) incubating the mixture, thereby producing a solution comprising an anti-microbial finishing agent.

6. A method according to claim 5, wherein the acetic acid solution is about 25% acetic acid.

7. A method according to claim 5 or 6, wherein the cationic surfactant is dehydrated sorbitol monooleate.

8. A method according to claim 5, 6 or 7 wherein the amino-alcohol derivative comprises an N-methyl amino acid.

9. A method according to any one of claims 5 to 8, wherein the percent weight of said amino-alcohol derivative in the solution of step c) is about 3 to about 10%.

10. A method according to any one of claims 5 to 9, wherein the percent weight of said cationic surfactant in the solution of step c) is about 2 to about 4%.

11. A method of producing an anti-microbial finishing agent, the method comprising the steps of:
a) combining a composition comprising chitin, chitosan and cellulose with a first acetic acid solution to form a first mixture;
b) combining a composition comprising chitin, chitosan and cellulose with a second acetic acid solution to form a second mixture;
c) combining a composition comprising chitin, chitosan and cellulose with a third acetic acid solution to form a third mixture;
d) combining an amino-alcohol derivative and a cationic surfactant with the first, second and third mixtures;
e) combining the first, second and third mixtures to form a fourth mixture; and
f) incubating the fourth mixture, thereby producing an anti-microbial finishing agent.

12. A method according to claim 11, wherein the first mixture is formed for about 9 to about 10 hours at temperature of about 70 to about 80°C.

13. A method according to claim 11 or 12, wherein the second mixture is formed for about 45 to about 50 hours at temperature of about 40 to about 50°C.

14. A method according to claim 11, 12 or 13, wherein the third mixture is formed for about 95 to about 100 hours at temperature of about 20 to about 25°C.

15. A method according to any one of claims 11 to 14, wherein step e) further comprises maintaining the fourth mixture for about 20 to about 25 hours at a temperature of about 20°C to about 25°C.

16. A method according to any one of claims 11 to 15, wherein the fourth mixture is incubated for about 40 to about 50 hours at a temperature of about 20°C to about 25°C.

17. A down product comprising a surface layer, a middle layer and a support layer, wherein anyone of the layers contains a composition according to claim 1.

18. A down product according to claim 17, wherein the middle layer comprises a composite material.

19. A down product according to claim 18, wherein the composite material is a composition according to claim 1.

20. A down product according to claim 18, 19 or 20 wherein the surface layer and the support layer comprise a fiberous material.

21. A down product according to claim 20, wherein the fiberous material has a fiber density that is not less than about 190 thread count.

22. A down product according to claim 17, wherein the middle layer contains a composition according to claim 1.

23. A down product according to any one of claims 17 to 22, wherein the support layer comprises a fabric.

24. A method for the production of a textile product, the method comprising the steps of:
combining the textile product with a solution containing an anti-microbial composition comprising chitin, chitosan and cellulose and drying the textile product.

25. A method according to claim 24, wherein the drying temperature is between about 120 to about 200°C.

26. A method according to claim 24 or 25, wherein the anti-microbial composition is sprayed on the textile product.

27. A method according to claim 24 or 25, wherein the textile product is soaked with the solution containing the anti-microbial composition.

28. A solution produced by a process according to claim 5.

29. A solution comprising acetic acid, a cationic surfactant, an amino-alcohol derivative and a non-covalent association of chitin, chitosan and cellulose.

30. A solution comprising about 25% acetic acid, dehydrated sorbitol monooleate, an N-methyl amino acid and a non-covalent association of chitin, chitosan and cellulose.
